(19) Europäisches Patentamt
European Patent Office
Office européen des brevets

(11) EP 2 362 255 A1

(12) **EUROPEAN PATENT APPLICATION**

(43) Date of publication:
**31.08.2011 Bulletin 2011/35**

(51) Int Cl.:
***G02B 7/02*** (2006.01)

(21) Application number: **11154567.9**

(22) Date of filing: **15.02.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **19.02.2010 JP 2010034636** | (71) Applicant: **Fujifilm Corporation**<br>**Minato-ku**<br>**Tokyo (JP)**<br><br>(72) Inventor: **Kojima, Shigeru**<br>**Saitama (JP)**<br><br>(74) Representative: **Klunker . Schmitt-Nilson . Hirsch**<br>**Patentanwälte**<br>**Destouchesstrasse 68**<br>**80796 München (DE)** |

(54) **An athermal lens device**

(57)    The athermal lens device (10) includes lenses (12,13), a lens holding frame (14), a coil spring (15) for pressing the lens holding frame toward an imaging surface direction, a ring (16) formed by looping a round bar, and a lens barrel (17) for containing them. The lens holding frame (14) includes a pressing surface intersecting with an optical axis at the imaging surface side. The lens barrel (17) has a sliding contact surface formed with a conical shape at an end of the imaging surface side of the lens container. The ring (16) is made of an invar material whose thermal expansion coefficient is very small, and disposed between the sliding contact surface and the pressing surface formed with a plain shape. The ring is constantly pressed to the sliding contact surface by bias of the coil spring (15) via the pressing surface. Position of the lens holding frame (14) changes according to environmental temperature to correct focus point.

FIG.1

**Description**

FIELD OF THE INVENTION

The present invention relates to an athermal lens device automatically correcting defocusing caused by environmental temperature change.

BACKGROUND OF THE INVENTION

A focus position in a lens system used for such as a camera shifts according to environmental temperature change. In particular, an infrared surveillance camera or a vehicle-mounted camera used outdoors at night has wide range in an environmental temperature, and image blur due to shift of focus position is large. The shift of focus position in the lens system according to temperature change is caused by that lens refractive power changes due to thermal expansion/contraction of lens elements, and that interval between each lens changes due to thermal expansion/contraction of a lens barrel that holds the lens system.

An athermal lens device is known as a lens device provided with a structure for automatically correcting defocus caused by the thermal expansion/contraction. The athermal lens device controls amount of image blur that occurs from the environmental temperature change in a permissible range.

For example, Japanese published unexamined application Sho-54-019757 discloses that lens elements are partly held by a lens holding frame made of a material whose thermal expansion coefficient is different from a lens barrel, in order to control image blur due to thermal expansion/contraction in a permissible range.

For example, the lens barrel is formed with aluminum, some of lens elements in the lens system are held by a holding frame made of aluminum and the other lens elements are held by a holding frame made of plastic whose thermal expansion coefficient is larger than aluminum or formed with iron whose thermal expansion coefficient is smaller than aluminum. However, the materials used for the lens holding frame are limited, and it is difficult for some structure of the lens system to select materials having appropriate thermal expansion coefficient. Moreover, it is further difficult to select materials if length of the lens holding frame is not enough, for example, the intervals between each lens element are short.

In this case, selecting material of the lens holding frame becomes easy if an invar material whose thermal expansion coefficient is extremely small is used as the lens barrel, thereby appropriate materials having necessary thermal expansion coefficient can be used for the lens holding frame.

However, the invar material is expensive, so that the cost increases if the invar material is used for a large-sized lens barrel. Additionally, since thermal expansion coefficient of the lens holding frame is different from that of the lens barrel, a large clearance is required for a fitting portion between the lens holding frame and the lens barrel. The large clearance makes it difficult to prevent shake of the lens holding frame. In case of using a relatively large diameter lens, for example 60 mm lens, thermal expansion/contraction toward a diameter of the lens element is large and lens supporting structure becomes extremely complex, thereby it is unsuitable for a camera requiring a handled size, for example a surveillance camera.

SUMMARY OF THE INVENTION

An object of the present invention is to provide a lens device which prevents image blur due to temperature change with an easy structure and a small space even if interval between lenses is short or large diameter lens is used.

In order to achieve the above object, a lens device of the present invention comprises a lens holding frame holding at least a lens and pressed toward an optical axis direction by a spring, a lens barrel for movably supporting lens holding frame toward the optical axis direction, formed with a rotationally symmetrical curved surface whose diameter around an optical axis changes along the optical axis, and a ring formed with a circular shape around the optical axis, made of a material whose thermal expansion coefficient is smaller than lens barrel, and clamped by lend holding frame, and rotationally symmetrical curved surface.

In the atheremal lens device, the rotationally symmetrical curved surface is preferably a conic surface, a partially spherical surface or a convex surface. The ring preferably has a circular cross-sectional surface, or a square cross-sectional surface and provided with an arc-shaped round chamfering at the position to be contacted with conic surface. Moreover, the ring preferably has a square cross-sectional surface and provided with a chamfering having same angle of inclination as conic surface at the position to be contacted with conic surface. The ring is preferably made of an invar material, and lens barrel and lens holding frame are made of aluminum. The lens is preferably a chalcogenide infrared lens.

According to the present invention, since a small space is acceptable for providing a mechanism for compensating temperature, a lens holding frame that is long toward in the optical axis direction is not required. Therefore, structure for holding lens does not complexify even if the interval between the lenses is short, and it is possible to automatically focus an image corresponding to the environmental temperature change.

BRIEF DESCRIPTION OF THE DRAWINGS

The above objects and advantages of the present invention will become easily understood by one of ordinary skill in the art when the following detailed description would be read in connection with the accompanying drawings.

Fig.1 is a sectional view illustrating a structure of an athermal lens device;
Fig. 2 is a pattern diagram illustrating move of a lens holding frame and a ring;
Fig. 3 is a view explaining a travel distance of the lens holding frame and the ring;
Fig. 4 is a sectional view illustrating round chamfering of the ring;
Fig.5 is a sectional view illustrating other chamfering of the ring;
Fig. 6 is a sectional view illustrating that a sliding contact surface is a curved surface;
Fig.7 is a sectional view illustrating that the sliding contact surface is an another curved surface; and
Fig. 8 is a sectional view illustrating a structure of another athermal lens device.

DESCRIPTION OF THE PREFERRED EMBODIMENTS

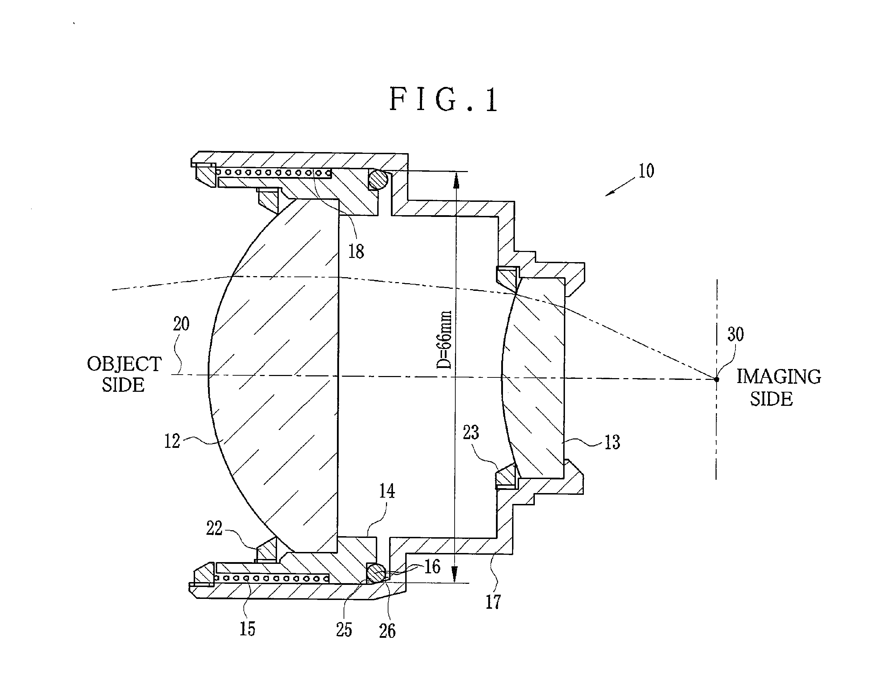

Shown in Fig.1, an athermal lens device 10 of the present invention is provided with an imaging optical system consisting of lens elements (hereinafter referred to as lenses) 12 and 13. The aheremal lens device 10 is used for, for example, an infrared surveillance camera chalcogenide infrared lenses are used for the lenses 12 and 13 . The athermal lens device 10 includes lenses 12 and 13, a lens holding frame 14 for containing and holding the lens 12, a coil spring 15 for pressing a lens holding frame 14 toward an imaging surface direction, a ring 16 formed by looping a rod-shaped material whose cross-sectional surface is circular, and a lens barrel 17 for containing them. The lens 12 is fixed by a lens retaining ring 22 and the lens 13 is located at the imaging surface side to the lens 12 and fixed by a lens retaining ring 23. The lens barrel 17 includes a lens accommodation 18 formed with a cylindrical shape around an optical axis 20 and movably supports the lens holding frame 14 contained in a lens accommodation 18 along the optical axis 20.
The lens holding frame 14 includes a pressing surface 25 at the imaging surface side, which intersects with the optical axis 20. The lens barrel 17 includes a sliding contact surface 26 that is a rotationally symmetrical curved surface, located at an end of the lens accommodation 18 at the imaging surface side. The sliding contact surface 26 is formed with a conical shape around the optical axis 20, having a determined inclination angle θ to the optical axis 20, in which an inner diameter thereof narrows toward the imaging surface direction along the optical axis 20. The ring 16 is made by an invar material whose thermal expansion coefficient $\alpha$ is quite small, and is located between the sliding contact surface 26 formed with a conical shape and the pressing surface 25 formed with a plain shape. The ring 16 is constantly pressed to the sliding contact surface 26 with bias force of the coil spring 15 via the pressing surface 25.
The lens holding frame 14 and the lens barrel 17 are made of aluminum whose thermal expansion coefficient $\alpha$ is $23 \times 10^{-6}$/ºC and the ring 16 is made of invar material whose thermal expansion coefficient is 0. Here, diameter D of a circular contact part where the ring material 16 and the sidling contact surface 26 contact is 66 mm. In case of the lens 12 in the embodiment, a focus point 30 has an optical property to shift 1.64 $\mu$m toward an object direction each additional 1°C of the environmental temperature. Moreover, in case where there is an optical property that the focus point 30 shifts 52$\mu$m toward the imaging surface direction when the lens 12 is moved 100 $\mu$m toward the imaging surface direction, the angle of inclination θ is calculated with the formula:

$$\theta = \arctan((0.5 \text{D} \times \alpha)/(1.64 \times 100/52)) = \arctan(0.759/3.154) = 13.53°$$

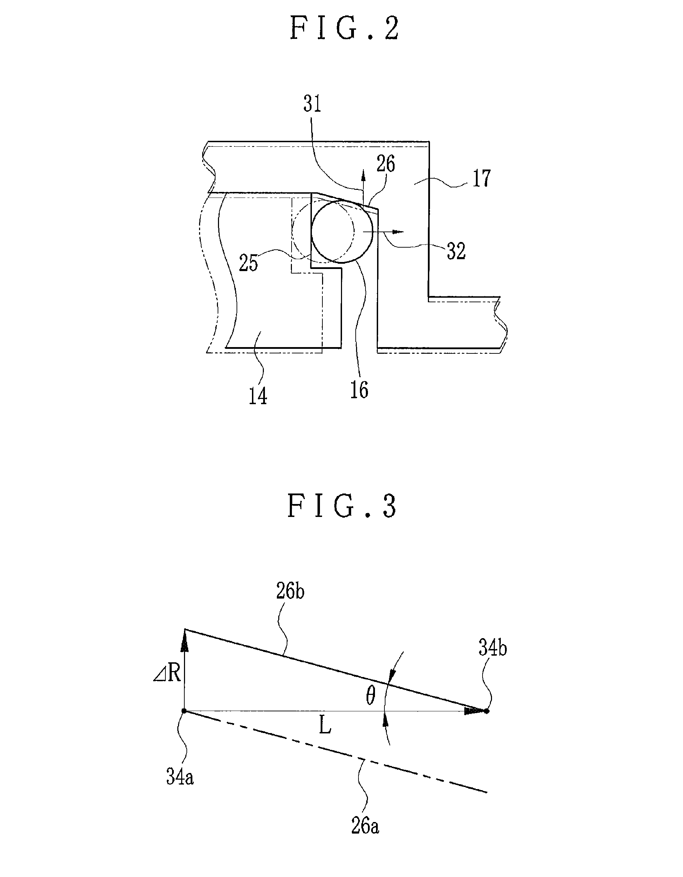

Next, an operation of the present invention is described below. In the imaging optical system, lens refractive power changes due to thermal expansion and contraction of the lens and interval between lenses changes due to thermal expansion and contraction of the lens barrel that holds the lens. In this embodiment, the focus point 30 shifts 1.64 $\mu$m toward the object direction each additional 1°C of the environmental temperature. Therefore, the focus point 30 shifts 32.8 $\mu$m toward the object direction when the environmental temperature increases 20°C, resulting in defocus. However, the interval between the lenses 12 and 13 changes according to increase of the temperature and the focus point 30 shifts 32.8 $\mu$m toward the imaging surface direction, so that focus shift due to expansion of the lens barrel is offset by the focus shift due to change of the lens intervals, and defocus is automatically corrected.
Shown in Fig.2, when the environmental temperature increases 20 °C, the lens holding frame 14 expands and the diameter of the sliding contact surface 26 enlarges toward a direction of an arrow 31, in which a sliding contact surface 26a expands to a sliding contact surface 26b as shown in Fig.3. The radius of the sliding contact surface 26b is larger than the sliding contact surface 26a, in which the difference is calculated with the formula:

$$\Delta R = 33 \times 10^{-3} \times 23 \times 10^{-6} \times 20°C = 15.18 \mu m$$

Since the ring 16 does not expand even when the environmental temperature increase, a gap is made between the ring 16 and the sliding contact surface 26, and the ring 16 is pressed by the pressing surface 25 to move toward a direction of an arrow 32 to contact the sliding contact surface 26. The lens holding frame 14 moves same distance as the ring 16, so that the lens 12 also moves toward the imaging surface direction.

The lens 12 moves same distance as the ring 16, in which distance L is between a contact point 34a that is a point before increase of the temperature and a contact point 34b that is a point after increase of the temperature. By substituting $\Delta R = 15.18 \mu m$ and $\theta = 13.53°$ for formula $L = \Delta R / \tan\theta$, $L = 63.08 \mu m$. When the lens 12 moves 100 $\mu m$ toward the imaging surface direction, the focus point 30 shifts $52\mu m$, so that the focus point 30 shifts 63.08 x (52/100)=32.8$\mu m$ toward imaging surface direction. However, the above shift is offset by shift of the focus point 30 toward the object direction because of lens material and expansion of the lens barrel (1.64 $\mu m$x20$\underline{o}$C=32.8 $\mu m$).

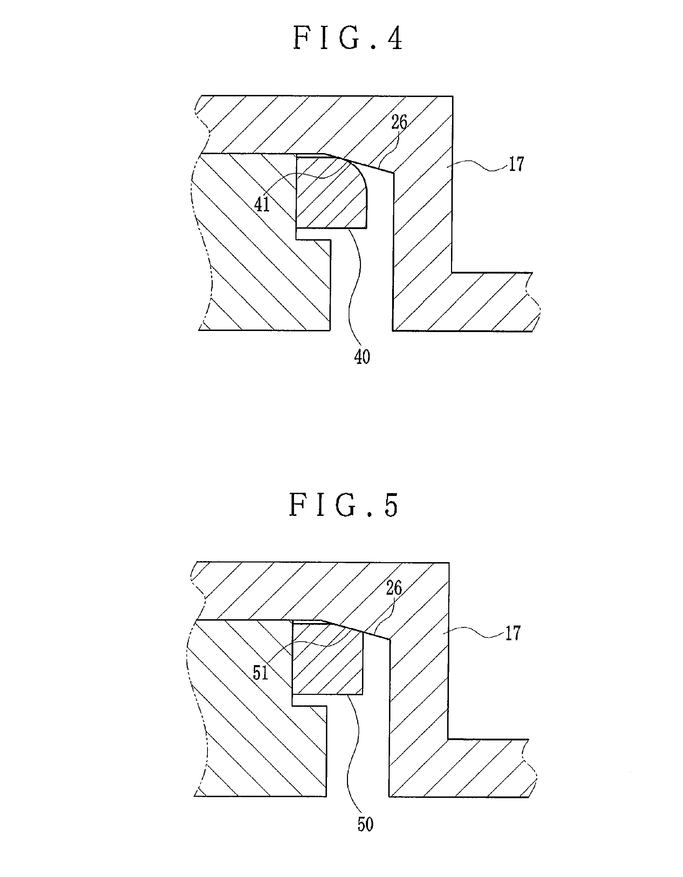

Moreover, the ring 16 is not necessary to have a circular cross-sectional surface. As shown in Fig.4, a ring 40 has an almost rectangular cross-sectional surface and provided with a round chamfering 41 having an arc cross-sectional surface at the position to be contacted with the sliding contact surface 26. It is noted a chamfering whose cross sectional surface is convex curve may be used, in place of the round chamfering 41. A ring 50 shown in Fig. 5 includes a chamfering 51 which is located at the position to contact the sliding contact surface 26, having same inclination as the sliding contact surface 26 in a conic-surface manner. The ring 16 is not necessarily made of invar material if the thermal expansion coefficient of the material is sufficiently smaller than that of the lens barrel 17.

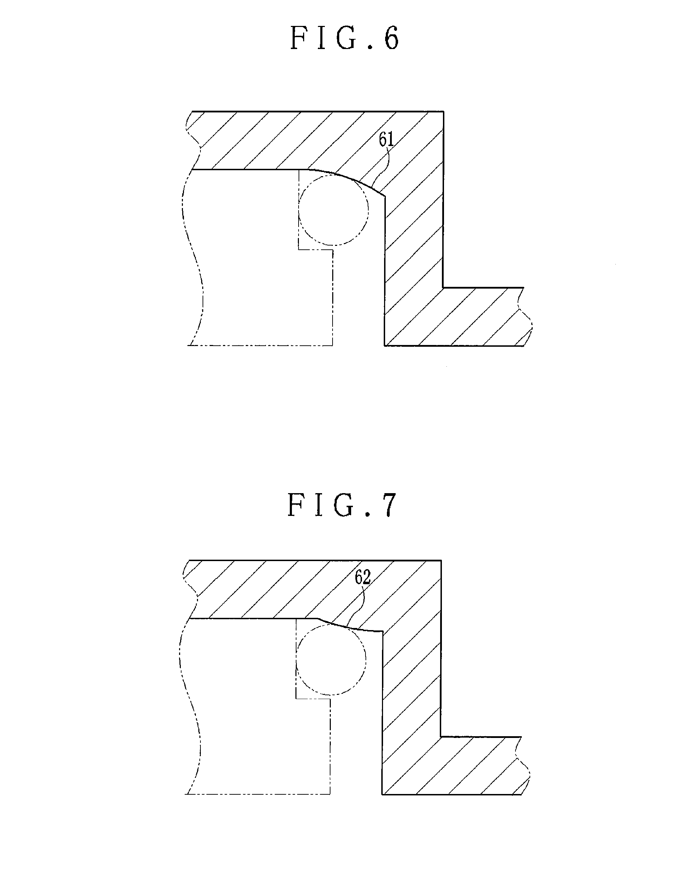

Moreover, the sliding contact surface (rotationally symmetrical curved surface) 26 is not necessarily a conic surface where the contact point 34a linearly changes. If there is no linear relation between travel distance of the lens 12 for correcting the focus shift at each temperature and amount of change of the sliding contact surface toward diameter direction, the sliding contact surface may be a partially sphere shape shown as the sliding contact surface 61 in Fig. 6 or may be a convex surface shown as the sliding contact surface 62 in Fig 7, in which the sliding contact surfaces are formed by rotating curved shape around an axis (lens optical axis) based on their relations.

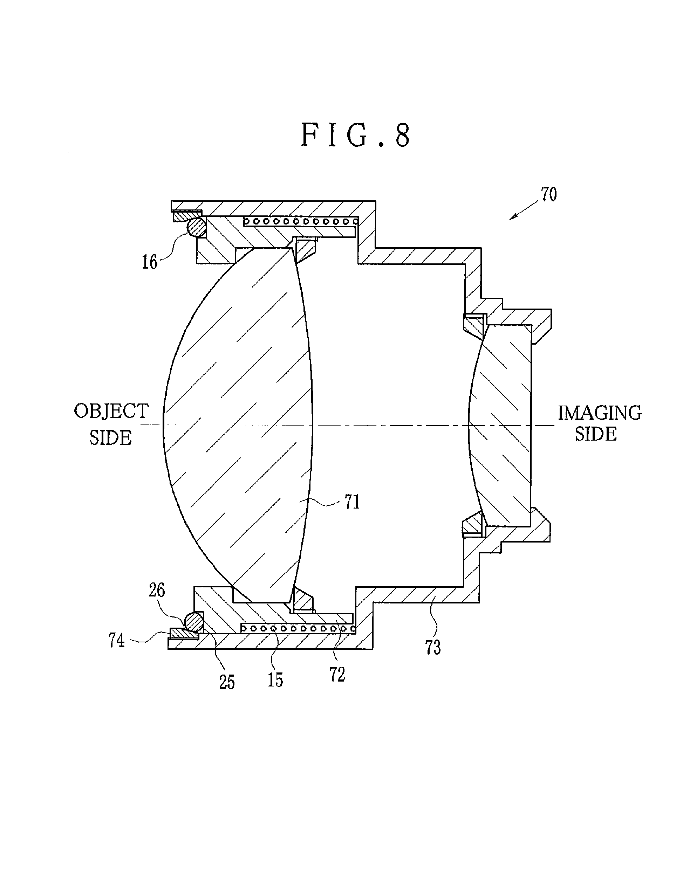

Next, another embodiment will be described with reference to Fig. 8. The embodiment shown in Fig. 1 has a structure that the lens 12 is moved toward the imaging surface direction so as to narrow the interval between the two lenses 12 and 13 when the environmental temperature increases. However, this embodiment has a structure that the lens 12 is moved toward the object direction according to increase of the environmental temperature when the focus point is shifted toward imaging surface direction according to increase of the environmental temperature. It is noted that the same constituent elements as those in Fig.1 are designated with the same symbols, and explanation thereof will not be repeated. In an atheremal lens device 70, a lens holding frame 72 containing and holding a lens 71 is pressed toward obj ect direction by the coil spring 15. The ring 16 is pressed by the pressing surface 25 formed in the lens holding frame 72 to the sliding contact surface 26 formed on a hold ring 74 that is fixed by a lens barrel 73.

The lens holding frame 72, the lens barrel 73 and the hold ring 74 are made of aluminum and they elongate according to increase of the environmental temperature, so that the diameter of the sliding contact surface 26 enlarges. Since the diameter of the ring 16 pressed to the sliding contact surface 26 by the coil spring 15 does not change, the ring 16 moves toward the object direction. Since the lens holding frame 72 pressing the ring 16 moves toward the object direction, the lens 71 moves toward the object direction. In this manner, the focal shift toward imaging surface direction according to increase of environmental temperature is offset by move of the lens 71 toward object direction, thereby defocus does not occur.

In each of the above embodiments, aluminum is used for the lens barrel 17, but the material is not limited to the metal and plastic may be used. The two lenses 12 and 13 may be made of infrared optical material such as germanium (Ge), silicon (Si), or zinc sulfide (Zns), not chalcogenide glass. Moreover, the lenses may be visible lenses, not infrared lenses. Furthermore, one of the two lenses 12 and 13 located at the object side is provided with a temperature control function, but, for example, a middle lens in a lens system having three lenses may be provided with a temperature control function. Still furthermore, the lens system may be consisted of one lens, or an optical system having other lens structure may be used. Additionally, plural lenses or a cemented lens may be attached to the lens holding frame that enables to correct position.

Various changes and modifications are possible in the present invention and may be understood to be within the present invention.

**Claims**

1. An atheremal lens device (10, 70) comprising:

   a lens holding frame (14, 72) holding at least a lens (12,71) and pressed toward an optical axis direction by a spring;
   a lens barrel (17, 73) for movably supporting said lens holding frame (14, 72) toward the optical axis direction, formed with a rotationally symmetrical curved surface (26, 61, 62) whose diameter around an optical axis (20) changes along the optical axis; and
   a ring (16, 40, 50) formed in a circular shape around the optical axis, made of a material whose thermal expansion coefficient is smaller than said lens barrel (17, 73), and clamped by said lend holding frame (14, 72) and said rotationally symmetrical curved surface (26, 61, 62).

2. The atheremal lens device according to claim 1, wherein said rotationally symmetrical curved surface (26) is a conic surface.

3. The atheremal lens device according to claim 1, wherein said rotationally symmetrical curved surface (61)is a partially spherical surface.

4. The atheremal lens device according to claim 1, wherein said rotationally symmetrical curved surface (62) is a convex surface.

5. The atheremal lens device according to any one of claims 1 to 4, wherein said ring (16) has a circular cross-sectional surface.

6. The atheremal lens device according to any one of claims 1 to 4, wherein said ring (16) has a square cross-sectional surface and provided with an arc-shaped round chamfering (41) at the position to be contacted with said rotationally symmetrical curved surface(26, 61, 62).

7. The atheremal lens device according to claim 2, wherein said ring has a square cross-sectional surface and provided with a chamfering (51) having same angle of inclination as said conic surface at the position to be contacted with said conic surface.

8. The atheremal lens device according to any one of claims 1 to 7, wherein said ring (16) is made of an invar material, and said lens barrel and said lens holding frame are made of aluminum.

9. The atheremal lens device according to any one of claims 1 to 8 wherein said lens (12, 71) is a chalcogenide infrared lens.

F I G . 1

# F I G . 2

31

26

17

25

32

14

16

# F I G . 3

26b

34b

⊿R

θ

L

34a

26a

# F I G . 4

# F I G . 5

# FIG.6

# FIG.7

# F I G . 8

OBJECT SIDE

IMAGING SIDE

Europäisches
Patentamt

European
Patent Office

Office européen
des brevets

## EUROPEAN SEARCH REPORT

Application Number

EP 11 15 4567

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 557 474 A (MCCRARY DONALD R [US]) 17 September 1996 (1996-09-17) * figures 1-3 * * column 2, lines 8-9, 12-17 * * column 3, lines 29-40 * * column 3, line 55 - column 4, line 9 * * column 4, line 66 * ----- | 1-9 | INV. G02B7/02 |
| X | US 2004/057130 A1 (KATZMAN STEVEN A [US]) 25 March 2004 (2004-03-25) * paragraph [0045] * * figures 1, 5 * ----- | 1-9 | |
| A | US 5 864 739 A (KANEKO FUMIO [JP] ET AL) 26 January 1999 (1999-01-26) * figure 3 * * column 4, line 38 - column 5, line 8 * ----- | 1-9 | |
| A | WO 99/35526 A1 (INTEL CORP [US]; BROOME BARRY G [US]) 15 July 1999 (1999-07-15) * figure 4 * * pages 5-6 * ----- | 1-9 | TECHNICAL FIELDS SEARCHED (IPC) G02B |
| A | US 6 441 956 B1 (PERLO PIERO [IT] ET AL) 27 August 2002 (2002-08-27) * column 2, line 11 * ----- | 9 | |

The present search report has been drawn up for all claims

| Place of search | Date of completion of the search | Examiner |
|---|---|---|
| The Hague | 14 April 2011 | Serbin, Jesper |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 15 4567

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2011

| Patent document cited in search report | | Publication date | Patent family member(s) | | Publication date |
|---|---|---|---|---|---|
| US 5557474 | A | 17-09-1996 | NONE | | |
| US 2004057130 | A1 | 25-03-2004 | AU | 2003299113 A1 | 19-04-2004 |
| | | | CA | 2537070 A1 | 08-04-2004 |
| | | | WO | 2004029686 A1 | 08-04-2004 |
| US 5864739 | A | 26-01-1999 | JP | 10193680 A | 28-07-1998 |
| WO 9935526 | A1 | 15-07-1999 | AU | 1917699 A | 26-07-1999 |
| | | | TW | 1266096 B | 11-11-2006 |
| | | | US | 6040950 A | 21-03-2000 |
| | | | US | 6292312 B1 | 18-09-2001 |
| | | | ZA | 9900012 A | 05-07-1999 |
| US 6441956 | B1 | 27-08-2002 | IT | TO990594 A1 | 08-01-2001 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO54019757 B